Europäisches Patentamt

European Patent Office

Office européen des brevets

(11) Numéro de publication : **0 012 671**
**B1**

(19)

(12) **FASCICULE DE BREVET EUROPÉEN**

(51) Int. Cl.³ : **C 08 F 8/44**, C 08 F 220/10,
C 09 D 11/10, D 21 H 1/40

(45) Date de publication du fascicule du brevet :
**17.10.84**

(21) Numéro de dépôt : **79400971.2**

(22) Date de dépôt : **05.12.79**

(54) Procédé de fabrication de liant pour encre d'imprimerie à base de nouveaux copolymères acryliques et liant ainsi obtenu.

(30) Priorité : **08.12.78 FR 7834577**

(43) Date de publication de la demande :
**25.06.80 Bulletin 80/13**

(45) Mention de la délivrance du brevet :
**17.10.84 Bulletin 84/42**

(84) Etats contractants désignés :
**AT BE CH DE GB IT LU NL SE**

(56) Documents cités :
**FR-A- 2 077 143**
**Le dossier contient des informations techniques présentées postérieurement au dépôt de la demande et ne figurant pas dans le présent fascicule.**

(73) Titulaire : **PEINTURES CORONA Société dite:**
**Ecluse Follen**
**Valenciennes (Nord) (FR)**

(72) Inventeur : **Marthe, Jean-Pierre**
**86, rue de Famars Appartement 29**
**La Bourette F-59300 Valenciennes (Nord) (FR)**

(74) Mandataire : **Chevallier, Robert Marie Georges**
**Cabinet BOETTCHER 23, rue La Boétie**
**F-75008 Paris (FR)**

Jouve, 18, rue St-Denis, 75001 Paris, France

## Description

L'invention a pour objet un procédé de fabrication de liant pour encre d'imprimerie à base de nouveaux copolymères acryliques, de nature cationique, qui peuvent être dilués à l'eau. Elle concerne aussi le liant pour encre d'imprimerie en résultant.

On connaît des polymères acryliques de nature anionique qui sont rendus diluables à l'eau grâce à la présence dans leurs chaînes de groupements carboxyliques. On accroît la solubilité dans l'eau de ces polymères par la neutralisation des groupements carboxyliques à l'aide de composés basiques. On les utilise alors couramment comme liant dans les encres d'imprimerie. Cependant, ces corps ont un inconvénient important en raison de leur sensibilité à l'eau qui conduit à une résistance au frottement humide inférieure à celle que possèdent les produits classiques en solution dans des solvants organiques comme les nitrocelluloses par exemple.

On connaît aussi comme liants utilisables dans les encres d'imprimerie des émulsions aqueuses ayant une bonne résistance au frottement humide, mais qui ne mouillent pas bien les pigments et qui sèchent de manière irréversible sur les cylindres d'impression.

L'invention a pour but principal un procédé de fabrication de liants pour encres d'imprimerie à base de nouveaux copolymères acryliques qui ont un bon pouvoir mouillant vis-à-vis des pigments, une bonne aptitude à la redissolution sur les cylindres d'impression, une bonne adhérence sur divers supports et qui ont une meilleure résistance à l'eau et aux alcalis que les polymères acryliques anioniques.

Les nouveaux copolymères acryliques utilisés selon l'invention, de nature cationique, présentent dans leurs chaînes des groupements aminés neutralisés.

Les copolymères acryliques utilisés selon l'invention sont préparés selon un procédé dans lequel on provoque la copolymérisation de monomères spécifiques, en proportions choisies, à température élevée, en présence d'un initiateur classique de polymérisation du type à radicaux libres et dans un solvant approprié ; si on le juge souhaitable, on peut opérer en présence d'agents de transferts de chaînes. Après la polymérisation, on neutralise au moins partiellement les copolymères à l'aide d'acide.

Les copolymères utilisés selon l'invention sont constitués par :

a) 3 à 25 % en poids d'esters d'aminoalkyles de l'acide acrylique et/ou méthacrylique,

b) 15 à 97 % en poids d'esters d'alkyles de l'acide acrylique et/ou méthacrylique,

c) 0 à 60 % en poids d'autres monomères éthyléniquement insaturés copolymérisables.

Les fractions a, b et c éventuellement, donnent ensemble 100 % en poids.

On choisit les composés a) dans le groupe comprenant les corps suivants : les méthacrylates de diméthylaminoéthyle, de t-butylaminoéthyle, de diéthylaminoéthyle ; les acrylates de diméthylaminoéthyle, de diéthylaminoéthyle.

On choisit les composés b) dans le groupe suivant : les méthacrylates de méthyle, de n-butyle, d'isobutyle ; les acrylates d'éthyle, de n-butyle, de 2-éthyl-hexyle.

On choisit les composés c) dans le groupe suivant : le styrène, le vinyl-toluène, l'acétate de vinyle, la vinyl-pyrrolidone, des méthacrylates ou des acrylates d'hydroxyalkyles, les acides acrylique et méthacrylique, l'acrylonitrile, le méthacrylonitrile, l'acrylamide, la méthacrylamide, la méthylolacrylamide, la méthylolméthacrylamide.

Pour produire la copolymérisation, on introduit dans un réacteur un solvant de polymérisation miscible à l'eau que l'on choisit parmi les suivants : les alcools tels que l'éthanol, l'isopropanol, le butanol tertiaire, les éthers de glycols tels que le méthyl-glycol, l'éthyl-glycol, le butyl-glycol, certains esters tels que le lactate de méthyle et le lactate d'éthyle. On chauffe à une température de 120 °C environ et on ajoute lentement les composés a), b), c) en respectant les proportions indiquées plus haut et l'initiateur de polymérisation, tout en agitant l'ensemble. De préférence, on fait l'adjonction des composés pendant une durée de plusieurs heures et, ensuite, on maintient, en agitant, la température à 120 °C environ pendant 1 à 2 heures, en ajoutant encore, éventuellement, de l'initiateur de polymérisation. Puis on refroidit en dessous de 100 °C, par exemple à 90 °C et on neutralise au moins partiellement les copolymères à l'aide d'un acide minéral ou organique. Après cette opération, on ajoute de l'éthanol et/ou de l'eau et on obtient une solution colloïdale des copolymères recherchés. Ces derniers sont utilisés comme liant pour encres d'imprimerie après une simple adjonction d'eau ou d'alcool pour qu'ils aient la consistance appropriée à l'emploi envisagé.

Selon l'invention, on peut employer les copolymères de l'invention comme liants dans les encres d'héliographie ou de flexographie.

Pour mieux faire comprendre le procédé de l'invention et en préciser les détails, on donnera maintenant une description d'un exemple de mise en œuvre.

Exemple

1) Préparation d'un copolymère utilisable selon l'invention

Dans un réacteur de 4 litres, muni d'un agitateur mécanique, d'un thermomètre, d'une ampoule d'adjonction et d'un réfrigérant ascendant, on a introduit 353 g d'éthylglycol. On a chauffé à 118 °C puis on a introduit en 3 heures le mélange suivant :

| | |
|---|---|
| méthacrylate de méthyle | 650 g, |
| acrylate de butyle | 250 g, |
| méthacrylate de diméthylaminoéthyle | 100 g, |
| AZDN (azobisisobutyronitrile) | 17 g. |

Pendant l'adjonction de ces composés, on a maintenu la température à 118-120 °C, puis, à la fin, on l'a maintenue encore pendant 1 heure 30 à 120°-123 °C. Durant cette durée, après 20 mn, 45 mn et 1 h 20, on a ajouté à trois reprises 1 g d'AZDN et 2,5 g d'éthylglycol. Ensuite, on a refroidi à 90 °C et on a ajouté, pour la neutralisation, 65 g d'acide lactique à 88 %. Après 20 mn de maintien à 90 °C, on a refroidi à 80 °C, et on a ajouté 721 g d'éthanol puis 353 g d'eau déionisée. On a obtenu sous forme de solution colloïdale une résine limpide ayant un extrait sec voisin de 40 % et une viscosité de 450 à 700 mPa.s (4,5 à 7 poises) à 25 °C.

2) Essais de résistance au frottement

Des essais comparatifs de résistance au frottement humide ont été effectués avec la résine obtenue dans l'exemple ci-dessus et avec une résine de la déposante, connue sous la référence FV 823V40 pour être une des meilleures résines acryliques anioniques existantes actuellement en ce qui concerne la résistance au frottement humide. Les essais ont été faits à l'aide de l'appareil connu appelé Plynomètre DOITTAU, avec une humidification à l'eau, à l'eau additionnée de 2 % de savon de Marseille, à l'eau de Javel ayant 8° chlorométriques. La résine de l'invention a supporté, dans tous les essais, un nombre de passages supérieur de 100 % à celui relevé avec la résine connue.

**Revendications**

1. Procédé de fabrication de liant pour encre d'imprimerie à base de résine acrylique neutralisée, caractérisé en ce qu'on utilise des copolymères acryliques cationiques à groupements aminés neutralisés au moins partiellement, résultant de la copolymérisation des corps suivants réunis dans les proportions indiquées :
   a) 3 à 25 % en poids d'esters d'aminoalkyles de l'acide acrylique et/ou méthacrylique,
   b) 15 à 97 % en poids d'esters d'alkyles de l'acide acrylique et/ou méthacrylique,
   c) 0 à 60 % en poids d'autres monomères éthyléniquement insaturés copolymérisables,
les fractions a, b, c, composant ensemble 100 % du poids.
2. Procédé selon la revendication 1, caractérisé en ce que les composés a) sont choisis dans le groupe suivant : les méthacrylates de diméthylaminoéthyle, de t-butylaminoéthyle, de diéthylaminoéthyle, les acrylates de diméthylaminoéthyle, de diéthylaminoéthyle.
3. Procédé selon la revendication 1, caractérisé en ce que les composés b) sont choisis dans le groupe suivant : les méthacrylates de méthyle, de n-butyle, d'isobutyle, les acrylates d'éthyle, de n-butyle, de 2-éthyl-hexyle.
4. Procédé selon la revendication 1, caractérisé en ce que les composés c) sont choisis dans le groupe suivant : le styrène, le vinyl-toluène, l'acétate de vinyle, la vinyl-pyrrolidone, des méthacrylates ou des acrylates d'hydroxyalkyles, les acides acrylique et méthacrylique, l'acrylonitrile, le méthacrylonitrile, l'acrylamide, la méthacrylamide, la méthylolacrylamide, la méthylolméthacrylamide.
5. Procédé selon l'une quelconque des revendications 1 à 4 caractérisé en ce qu'après la copolymérisation des corps choisis, on refroidit en dessous de 100 °C, on neutralise au moins partiellement les copolymères à l'aide d'un acide minéral ou organique, on ajoute de l'éthanol et/ou de l'eau pour obtenir une solution colloïdale à laquelle une adjonction d'eau ou d'alcool procure le liant recherché.
6. Liant pour encre d'imprimerie caractérisé en ce qu'il est obtenu à partir d'au moins un copolymère acrylique cationique selon l'une quelconque des revendications 1 à 5.
7. Liant pour encre d'imprimerie à base de résine acrylique neutralisée, caractérisé en ce qu'il contient au moins un copolymère acrylique cationique à groupements aminés neutralisés au moins partiellement, résultant de la copolymérisation des corps suivants réunis dans les proportions indiquées :
   a) 3 à 25 % en poids d'esters d'aminoalkyles de l'acide acrylique et/ou méthacrylique,
   b) 15 à 97 % en poids d'esters d'alkyles de l'acide acrylique et/ou méthacrylique,
   c) 0 à 60 % en poids d'autres monomères éthyléniquement insaturés copolymérisables,
les fractions a, b, c, composant ensemble 100 % du poids.

**Claims**

1. A method of manufacture of a binder for printing ink, having a base of neutralized acrylic resin, characterized in that one employs cationic acrylic copolymers having at least partially neutralized amino-groups, resulting from the copolymerization of the following compounds joined in the indicated proportions :
   a) 3 to 25 % by weight of aminoalkylesters of acrylic and/or methacrylic acid ;
   b) 15 to 97 % by weight of alkylesters of acrylic and/or methacrylic acid ;
   c) 0 to 60 % by weight of other copolymerisable monomers unsaturated in ethylene ;
the fractions a, b, c composing together 100 % of the weight.
2. A method as in Claim 1, characterized in that the compounds a) are chosen from the following group : the methacrylates of dimethylaminoethyl, of t-butylaminoethyl, and of diethylaminoethyl and the acrylates of dimethylaminoethyl and of diethylaminoethyl.
3. A method as in Claim 1, characterized in that the compounds b) are chosen from the following group : the methacrylates of methyl, of n-butyl and of isobutyl and the acrylates of ethyl, of n-butyl and of 2-ethylhexyl.

4. A method as in Claim 1, characterized in that the compounds c) are chosen from the following group : styrene, vinyl-toluene, vinyl-acetate, vinyl-pyrrolidone, methacrylates or acrylates of hydroxyalkyls, acrylic and methacrylic acid, acrylonitrile, methacrylonitrile, acrylamide, methacrylamide, methylolacrylamide, and methylolmethacryl-amide.

5. A method as in any one of the Claims 1 to 4, characterized in that after the copolymerization of the chosen compounds one cools below 100 °C, the copolymers are neutralized at least partially by means of an inorganic or organic acid, ethyl alcohol and/or water are added in order to obtain a colloidal solution to which an addition of water or alcohol provides the binder sought for.

6. A binder for printing ink, characterized in that it is obtained from at least one cationic acrylic copolymer as in any one of the Claims 1 to 5.

7. A binder for printing ink, having a base of neutralized acrylic resin, characterized in that it contains at least one cationic acrylic copolymer having at least partially neutralized amino-groups, resulting from the copolymerization of the following compounds joined in the indicated proportions :
   a) 3 to 25 % by weight of aminoalkylesters of acrylic and/or methacrylic acid ;
   b) 15 to 97 % by weight of alkylesters of acrylic and/or methacrylic acid ;
   c) 0 to 60 % by weight of other copolymerisable monomers unsaturated in ethylene ;
the fractions a, b, c composing together 100 % of the weight.

**Ansprüche**

1. Verfahren zur Herstellung eines Bindemittels für Druckfarben auf Basis eines neutralisierten Acrylharzes, dadurch gekennzeichnet, daß kationische acrylische Copolymere mit zumindest teilweise neutralisierten Aminogruppen eingesetzt werden, welche durch Copolymerisierung der folgenden Verbindungen in den angegebenen Verhältnissen erhalten werden :
   a) 3 bis 25 Gew.-% Aminoalkylester der Acrylsäure und/oder Methacrylsäure,
   b) 15 bis 97 Gew.-% Alkylester der Acrylsäure und/oder Methacrylsäure,
   c) 0 bis 60 Gew.-% anderer copolymerisierbarer äthylenisch ungesättigter Monomerer,
wobei die Anteile a, b und c miteinander 100 Gew.-% ausmachen.

2. Verfahren nach Anspruch 1, dadurch gekennzeichnet, daß die Verbindungen a) aus folgender Gruppe ausgewählt werden : Dimethyl-aminoäthylmethacrylate, t-Butylaminoäthyl-methacrylate, Diäthylaminoäthylmethacrylate, Dimethylaminoäthylacrylate, Diäthylaminoäthy-lacrylate.

3. Verfahren nach Anspruch 1, dadurch gekennzeichnet, daß die Verbindungen b) aus folgender Gruppe ausgewählt werden : Methylmethacrylate, n-Butylmethacrylate, Isobutylmethacrylate, Äthylacrylate, n-Butylacrylate, 2-Äthylhexylacrylate.

4. Verfahren nach Anspruch 1, dadurch gekennzeichnet, daß die Verbindungen c) aus folgender Gruppe ausgewählt werden : Styrol, Vinyltoluol, Vinylacetat, Vinylpyrrolidon, Hydroxyalkyl-methacrylate oder -acrylate, Acrylsäure und Methacrylsäure, Acrylonitril, Methacrylonitril, Acrylamid, Methacrylamid, Methylolacrylamid, Methylolmethacrylamid.

5. Verfahren nach einem der Ansprüche 1 bis 4, dadurch gekennzeichnet, daß nach der Copolymerisation der gewählten Verbindungen unter 100 °C abgekühlt wird, die Copolymeren mit Hilfe einer Mineralsäure oder einer organischen Säure zumindest teilweise neutralisiert werden, und Äthanol und/oder Wasser zugegeben werden, um eine kolloidale Lösung zu erhalten, aus welcher durch Zugabe von Wasser oder Alkohol das gewünschte Bindemittel erhalten wird.

6. Bindemittel für Druckfarben, dadurch gekennzeichnet, daß es ausgehend von mindestens einem kationischen acrylischen Copolymeren gemäß einem der Ansprüche 1 bis 5 erhalten wird.

7. Bindemittel für Druckfarben auf Basis eines neutralisierten Acrylharzes, dadurch gekennzeichnet, daß es mindestens ein kationisches acrylisches Copolymer mit zumindest teilweise neutralisierten Aminogruppen enthält, welches durch Copolymerisierung der folgenden Verbindungen in den angegebenen Verhältnissen erhalten wird :
   a) 3 bis 25 Gew.-% Aminoalkylester der Acrylsäure und/oder Methacrylsäure,
   b) 15 bis 97 Gew.-% Alkylester der Acrylsäure und/oder Methacrylsäure,
   c) 0 bis 60 Gew.-% anderer copolymerisierbarer äthylenisch ungesättigter Monomerer,
wobei die Anteile a, b und c miteinander 100 Gew.-% ausmachen.